# EUROPEAN PATENT SPECIFICATION

(11) **EP 0 972 624 B1**
(45) Date of publication and mention of the grant of the patent: **25.09.2002**
(21) Application number: 98113195.6
(22) Date of filing: 15.07.1998
(51) Int. Cl.: B29C 37/00, B29C 45/44, B29C 33/00

(54) **Method and molding device for forming a grommet**
Verfahren und Formvorrichtung zur Herstellung einer Durchführungshülse
Procédé et dispositif de moulage pour la fabrication d'une douille de traversée

(43) Date of publication of application: 19.01.2000
(73) Proprietor: SUMITOMO WIRING SYSTEMS, LTD., Yokkaichi City Mie 510 (JP)
(72) Inventor: Sakata, Tsutomu, c/o Sumitomo Wiring Systems, Ltd., Yokkaichi-City, Mie 510 (JP)
(74) Representative: Glawe, Delfs, Moll & Partner

(56) References cited:
- EP-A- 0 121 644
- GB-A- 2 039 817
- GB-A- 2 191 899
- PATENT ABSTRACTS OF JAPAN vol. 018, no. 493 (E-1606), 14 September 1994 & JP 06 165347 A (YAZAKI CORP), 10 June 1994

## Description

### BACKGROUND OF THE INVENTION

### FIELD OF INVENTION

This Invention relates to a method for molding axially hollow grommets as well as a device and mold for use therein.

### DESCRIPTION OF PRIOR ART

In the automotive industry, a grommet is used to seal a hole in a panel through which a wire harness has passed. Generally it is molded from an elastomeric material and the wire harness is passed through the grommet prior to insertion. Since the grommet is made of an elastomer, it is able to deform and fill the hole through which the wire harness passes and provide both soundproofing and waterproofing. Typically, the panel is a firewall and thus the soundproofing and waterproofing aspect is between the engine compartment and the passenger compartment.

Conventionally, grommets have been molded in a funnel design, wherein the large end has a stopping flange which interacted with the panel so as to fill the hole. The small end fits tightly around the bundle of wires in the wire harness so as to form a secure seal.

An improved design for a grommet has been suggested in Japanese Patent Specification JP-C-3-9589 (1991). In this document, the grommet, as removed from the mold, is shown in Figure 1. Grommet 15 comprises hollow 30, body 24, long tube funnel section 31 and short tube funnel section 32. Funnel sections 31 and 32 have long tube portions and short tube portions which have been marked 33 and 34, respectively. Annular depression 35 is molded into body 24 of grommet 15. Also, reinforcement 38 is molded into end 17 of long tube portion 33.

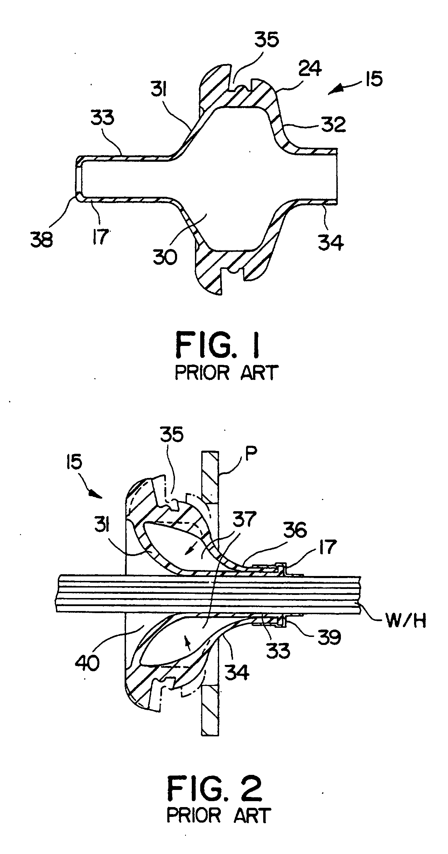

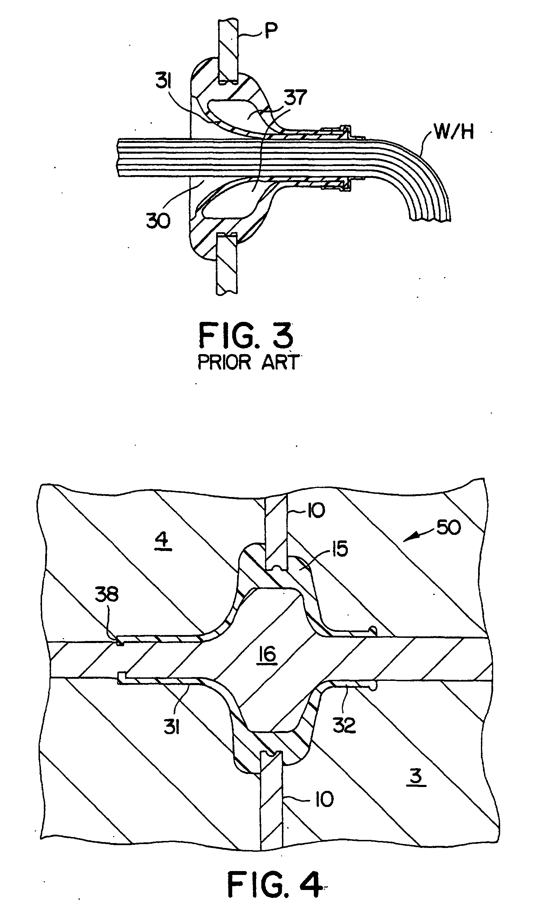

Figures 2 and 3 illustrate the use of grommet 15 with wire harness W/H to fill a hole in panel P. As shown therein, the user of grommet 15 must invert long tube funnel section 31 into short tube funnel section 32 so that long tube portion 33 doubles within short tube portion 34, thus forming double walled portion 36. Wire harness W/H is then inserted through grommet 15 and tape 39 is secured around the end of double walled portion 36. Because of cavities 37, body 24 is able to deform as shown in Figures 2 and 3, so that grommet 15 can be easily inserted into the hole in panel P. The arrows in Figure 2 illustrate the flexing action of the elastomeric material used to mold grommet 15. It is preferred that sealant 40 be injected around the wire harness so as to increase the waterproofing and soundproofing ability of the grommet.

One of the problems with grommet 15 is that the operator, when mounting the grommet on the wire harness, has a difficult time inverting long tube funnel section 31 into short tube funnel section 32. Not only is this process of inversion difficult, but it is also time consuming and slows the overall mounting of wire harness W/H in panel P.

JP-A-06165347 discloses a method of manufacturing a grommet having a long tube funnel section at one end and a large diameter opening at the other end. The grommet is molded using a core, and after molding the core is pulled out towards the large diameter opening of the grommet resulting in the long tube funnel section being inverted.

It is well known to mold heat-curable plastic material about a mandrel within the cavity of a split mold into a hollow article having an axial opening therethrough. After curing, the mandrel is removed through the opening and the article removed from the mold. However, prior methods and devices for-producing such grommets are unduly complex and do not lend themselves well to automation. It is an object of the present Invention to provide such apparatus and method which is capable of being carried out rapidly and reliably.

### SUMMARY OF THE INVENTION

Applicant has now discovered a method for forming a grommet of the type where the grommet has a body, an axial hollow therein, a peripheral channel in the body, a short tube funnel section at one end, and a long tube funnel section at the other end. The long tube funnel section is inverted into the short tube funnel section to form a double walled portion. The molding process entails the formation of a double walled portion of the grommet by using the core in the molding apparatus to reverse the long tube funnel section into the short tube funnel section.

Broadly, the grommet in accordance with the present Invention comprises: a body, a long tube funnel section on one side of the body, and a short tube funnel section on the other side of the body. The molding space is defined by a core and an external multi-part mold structure, which structure has a middle plate.

The method comprises
(a) molding the grommet in a closed mold so that the middle plate, which is part of the multi-part structure, is in contact with the body of the grommet when the mold is closed;
(b) opening the mold, leaving the core and the middle plate in contact with the grommet;
(c) moving the core through the grommet so that the long tube funnel section is inverted into the short tube section, thereby forming the double walled portion; and
(d) releasing the grommet from contact with the middle plate and the core.

The novel mold of the present Invention has L-shaped protrusions at one end of the core and corresponding depressions in the external multi-part mold structure. The method of the present Invention avoids the problem of the operator having to invert the long tube funnel section into the short tube funnel section, and the grommet can be employed as produced without further manipulation.

The device for carrying out the method comprises a fixed mold, a movable mold, and a middle plate between the two molds. The movable mold is adapted for movement among a closed position, wherein the fixed mold and the movable mold are adjacent each other with the middle plate between them; an intermediate position, wherein the movable mold and the middle plate are spaced apart from the fixed mold; and an open position, wherein the movable mold is spaced further apart from the fixed mold than the middle plate. The plane of the middle plate is preferably perpendicular to the movement of the movable mold.

There is a core affixed to the movable mold and the core, the fixed mold, and the movable mold define a molding space for the grommet when they are in the closed position. In this position, an edge of the middle plate projects into the molding space so that, when moldable material is injected into the space and solidifies, the peripheral channel is formed with the edge therein.

The core has, on its mold end remote from the middle plate, a retaining element which, when the movable mold is moved from the intermediate position to the open position, carries the adjacent neck of the grommet into the axial hollow. To effectuate this, the edge in the channel prevents the body from moving toward the open position.

In a preferred form of the device, the movable mold is mounted slidably on at least one guide pin which extends parallel to the direction of movement of the movable mold. The proximal end of the guide pin is mounted on the fixed mold and the distal end is remote therefrom. It has been found advantageous to provide two guide pins which are spaced apart in a direction perpendicular to the movement.

The guide pin also carries a stop member for the middle plate adjacent the distal end. Thus, when the movable mold moves from the intermediate position to the open position, the middle plate is retained in the intermediate position. If the moldable material so requires, a heating device can be provided adjacent the molding space to cure or otherwise set the moldable material.

The operation of the device comprises introduction of the moldable material through a sprue and a gate into the molding space while the various elements are in the closed position. This is followed by movement of the movable mold to the intermediate position, whereby the grommet is disengaged from the fixed mold. At this point, the moldable material formed by the sprue and the gate is attached to the grommet.

The movable mold is then further moved to the open position, but the middle plate remains in its intermediate position due to the stop members on the distal ends of the guide pins. The retaining element on the mold end of the core remote from the middle plate engages the adjacent end of the grommet. The edge of the middle plate being in the intermediate position, retains the body of the grommet in that position so that, as the core is withdrawn, the retaining element pulls the end of the grommet into the axial hollow. Thereafter, the grommet is removed from the middle plate and the sprue and gate are removed.

In a modification of the device, after the formation of the grommet, the movable mold moves in a first direction to an intermediate position wherein the movable mold and grommet are together spaced apart from the fixed mold. The middle plate is held in this position by stops so that, when the movable mold moves to its open position, the grommet separates therefrom.

The core is then withdrawn from the axial hollow in a second direction which is perpendicular to the first direction. The edges of the middle plate which are located in the channel restrain the grommet so that the core can be removed. In a preferred form of the Invention, there is a retainer on the mold end of the core opposite to the second direction. This engages the adjacent end of the grommet so that, as the core is withdrawn, the adjacent end is drawn into the axial hollow. The retainer is then released and the grommet removed from the middle plate. Thereafter, if necessary, any unwanted material is cut away.

### BRIEF DESCRIPTION OF THE DRAWINGS

In the accompanying drawings, constituting a part hereof, and in which like reference characters indicate like parts,
- Figure 1: illustrates a grommet molded in accordance with the prior art;
- Figure 2: illustrates the grommet of Figure 1 with a wire harness in accordance with the prior art;
- Figure 3: illustrates the grommet with a wire harness mounted in a panel;
- Figure 4: illustrates a mold used for making the grommet in accordance with the method of the present Invention;
- Figures 4 to 7: illustrate the method steps in accordance with the process of the present Invention;

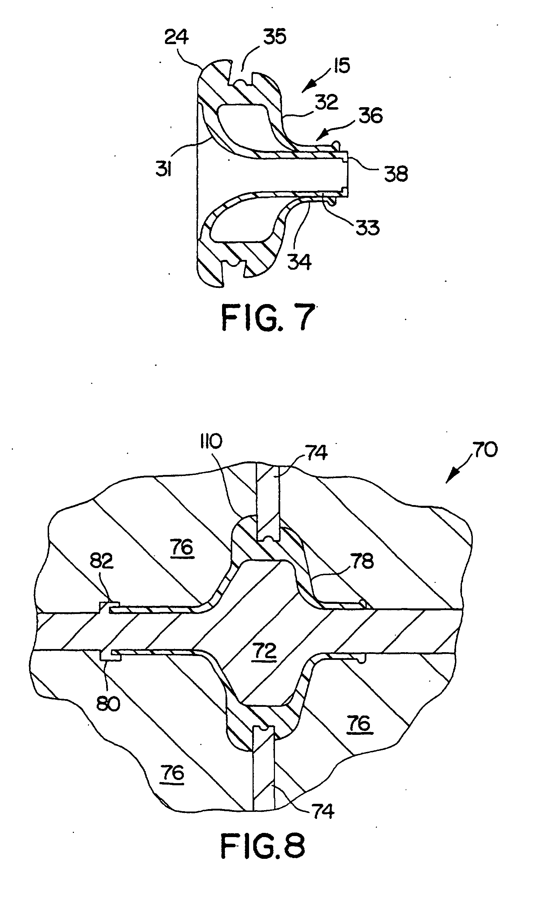

- Figure 8: illustrates a novel mold in accordance with the present Invention;

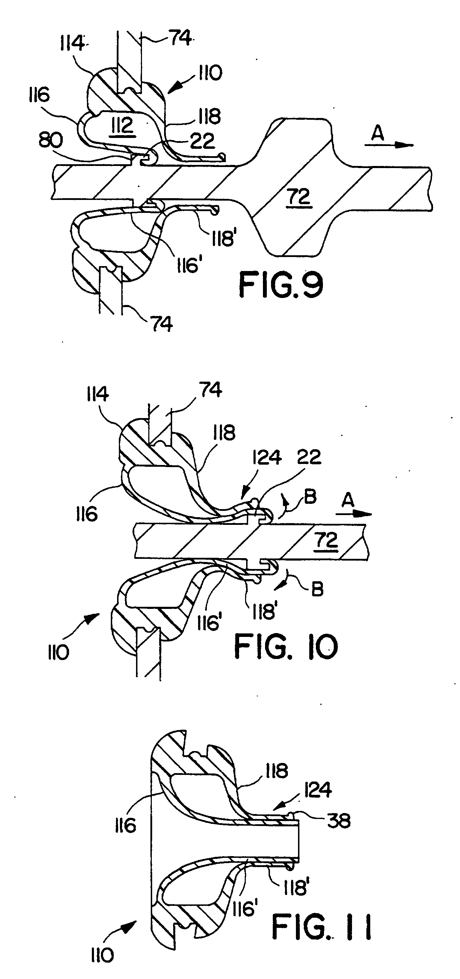

- Figures 9 to 11: illustrate the process of the present Invention employing a novel mold of the present Invention;

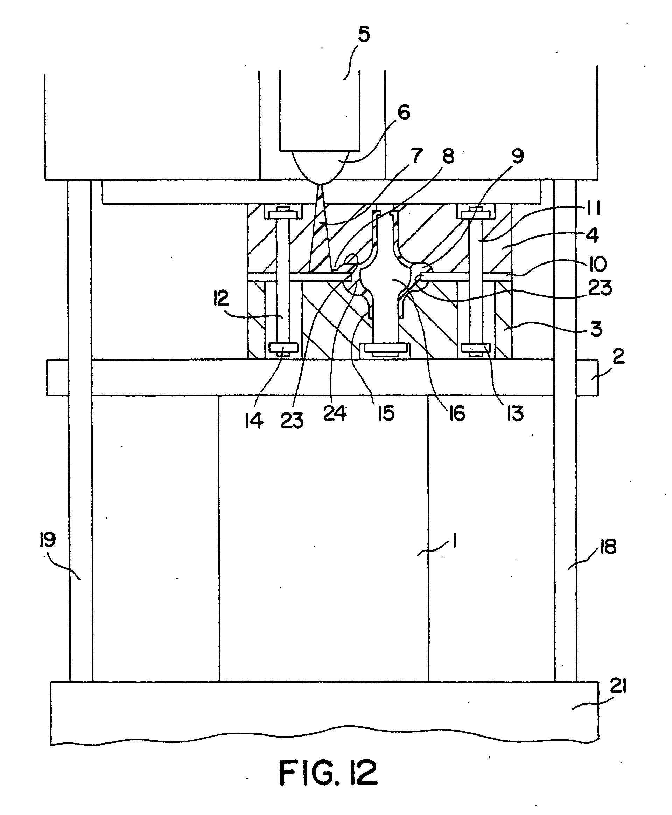

- Figure 12: is an elevation, partly in section, showing the device of the present Invention in its closed position;

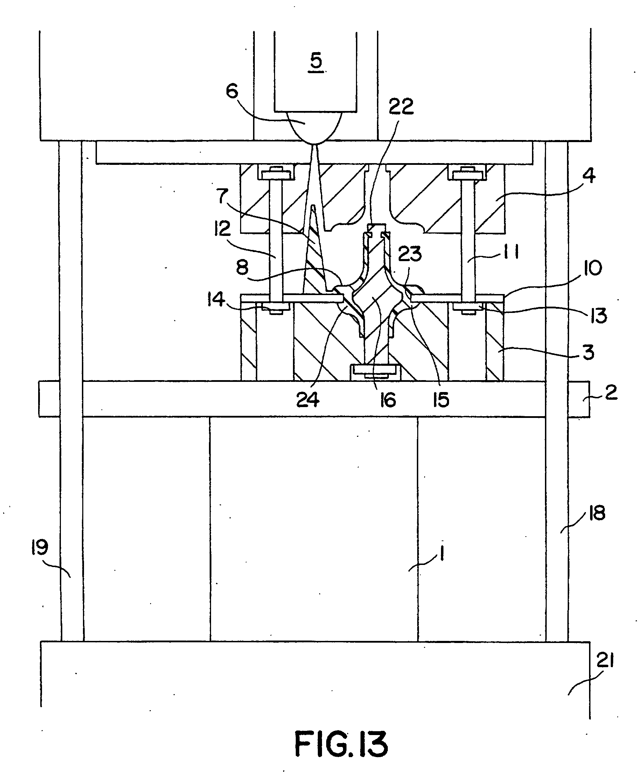

- Figure 13: is a view, similar to that of Figure 12, with the device in its intermediate position;

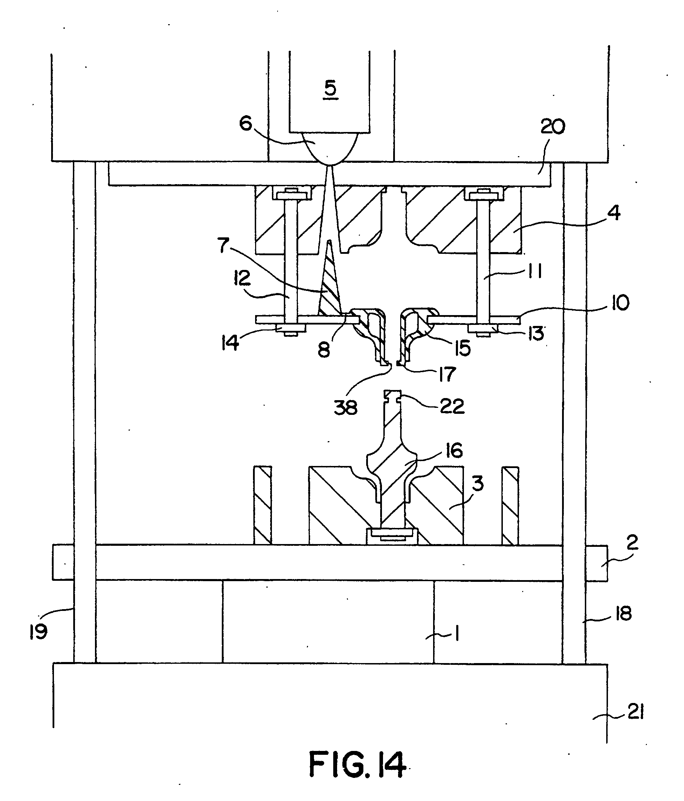

- Figure 14: is a view, similar to that of Figure 12, with the device in its open position;

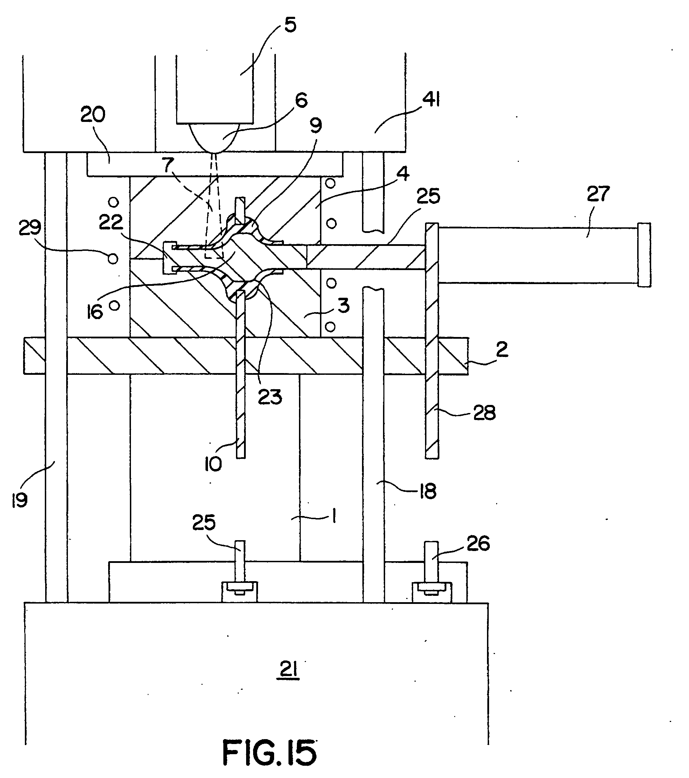

- Figure 15: is a side elevation, partly in section, of the modified device of the present Invention in the closed position;

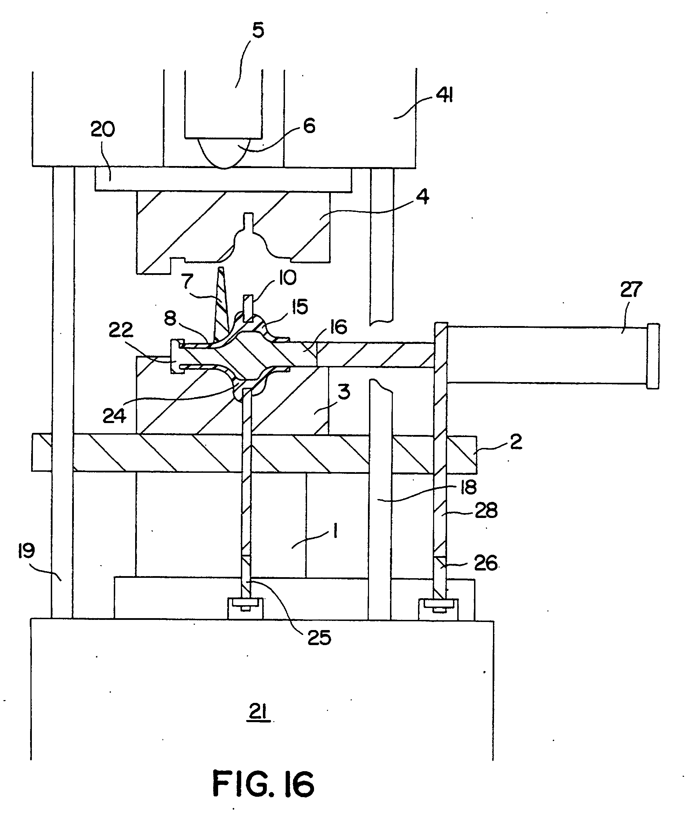

- Figure 16: is a view, similar to that of Figure 15, with the modified device in the intermediate position; and

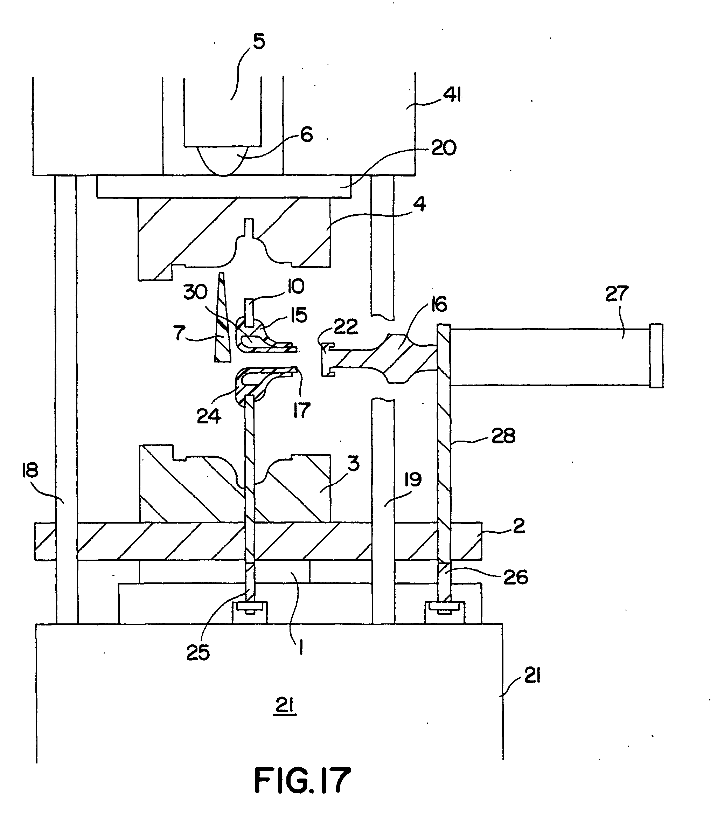

- Figure 17: is a view, similar to that of Figure 15, with the modified device in the open position.

### DETAILED DESCRIPTION OF THE INVENTION

Referring to Figures 4 to 7, mold 50 is a multi-part mold having an external mold structure comprising middle plate 10 and mold sections 3 and 4. When mold 50 is closed, the external mold structure and core 16 define the molding space and grommet 15 is molded therein from elastomeric material.

Fluid elastomeric material is injected by means of a tube (not shown) and an extruder apparatus (not shown) to form grommet 15. The fluid elastomeric material is injected into the molding space and fills it as shown in Figure 4. The material is then allowed to harden and form grommet 15 while the mold remains closed. Suitable elastomeric materials comprise rubber and synthetic rubbers, the latter including polychloroprene, butadiene-styrene copolymers, and ethylene-propylene-diene (EPDM).

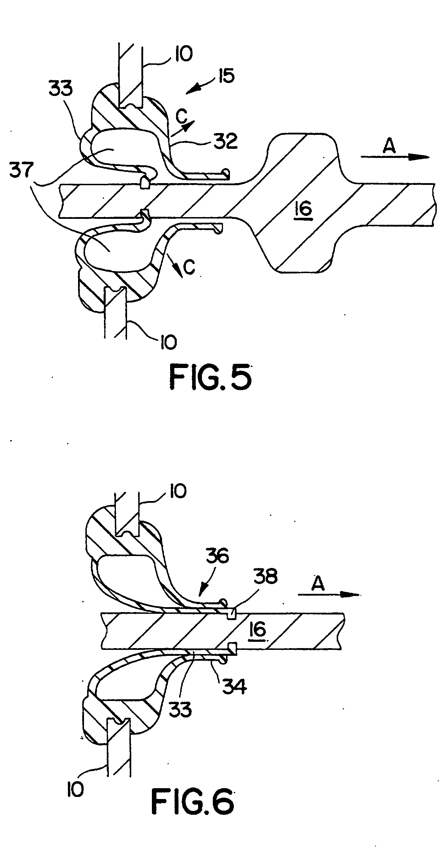

Once the fluid elastomeric material has hardened sufficiently, the mold is opened and molds 3 and 4 are separated, leaving middle plate 10 and core 16 in contact with grommet 15, as shown in Figures 5 and 6. Core 16 is then pulled through grommet 15 so that long tube funnel section 31 is inverted into short tube funnel section 32. Arrow A illustrates the direction of movement of the core. As will be appreciated by those of ordinary skill in the art, the elastomeric nature of grommet 15 permits short tube funnel section 32 to flex outward as shown by arrows C to allow the bulbous section of core 16 to pass through short tube funnel section 32 and exit the grommet.

In Figure 6, core 16 has been pulled further through grommet 15 so that double walled portion 36 is formed by long tube portion 33 and short tube portion 34. At this point in the molding operation, grommet 15 is still in contact with middle plate 10 and core 16. The core is then released from reinforcement 22 which had been providing the connection between core 16 and grommet 15. This allows core 16 to be pulled completely through grommet 15 to leave grommet 15 in the configuration shown in Figure 7. Grommet 15 is then removed from middle plate 10. In the method as shown in Figures 4 through 7, the long tube funnel section of the grommet has been inverted into the short tube funnel section and the fully formed grommet is now ready for use during assembly of an automobile and the insertion of the wire harness through a wall.

Figures 8 through 11 show the present Invention using an alternative mold design for forming the grommet. As shown in Figure 8, mold 70 is made up of core 72, and an external mold structure which comprises middle plate 74 and mold sections 76. When mold 70 is closed, the external mold structure and core 72 define hollow 78. The difference between core 72 and core 52 is that core 72 has L-shaped protrusion 80 and mold sections 76 have. complementary depressions 82 which allow the mold to be fully closed. Mold 70 is operated in a manner similar to mold 50 in that grommet 110 is formed by injection of the elastomeric material into cavity 78. Grommet 110 is essentially identical to grommet 10 except for the absence of reinforcement 38, thereby eliminating the need for depressions in core 72. In order to invert grommet 110, mold 70 is opened while leaving core 72 and central mold plate 74 in contact with grommet 110, in the same manner as for grommet 15.

As shown in Figure 9, when the mold has been opened, core 72 is moved in the direction of arrow A. Because of the elastomeric nature of the material from which grommet 110 is made, short tube funnel section 118 flexes outward and allows the bulbous portion 114 of core 72 to pass therethrough. During the movement of core 72, long tube funnel section 116 is pulled into open cavity 112 in the same manner as depicted in Figure 5. Due to the frictional forces between the end of long term funnel section 116 and L-shaped protrusion 80, long tube funnel section is drawn into cavity 112.

As shown in Figure 10, the movement of core 72 continues in the direction of arrow A until long tube portion 116' has been inverted into short tube portion 118' and double walled portion 124 is formed. At this point, the portion of long tube funnel section 116 which is hooked under L-shaped protrusion 80 is released as shown by the arrows labeled B in Figure 10. This action releases the frictional contact between core 72 and grommet 110.

Once the frictional engagement between long tube funnel section 116 and core 72 is released, core 72 continues to be moved in the direction of arrow A in order to completely eliminate the contact between core 72 and grommet 110. At that time, central mold plate 74 is released from grommet 110 and the finished grommet as shown in Figure 11 remains. As can be seen in Figure 11, grommet 110 is substantially similar to grommet 10 except that grommet 110 does not have reinforcement 38. It has been found that the absence of reinforcement 38 from grommet 10 does not affect either its soundproofing or waterproofing characteristics.

As shown in Figures 12 to 14, the device for carrying out the method of the present Invention comprises base 21, mold clamping cylinder 1, movable plate 2, movable mold 3, and fixed mold 4. The closed position is shown in Figures 12 and 15 and middle plate 10 is located between movable mold 3 and fixed mold 4. Edge 23 projects into the molding space to form the channel in body 24. Injection cylinder 5 introduces the moldable material through nozzle 6, sprue 7, and gate 8 into the molding space. Stop members 13 and 14 are provided on the distal ends of guide pins 11 and 12, respectively. Retainer 22 (in this case a peripheral groove in core 16) receives the complementary radially inwardly extending rib on grommet 15.

As movable plate 2 is moved to its intermediate position, as shown in Figure 13, grommet 15, along with gate 8 and sprue 7, is detached from fixed mold 4. Since core 16 is affixed to movable mold 3 and movable mold 3 is attached to movable plate 2, all of these elements are separated from fixed mold 4. In Figure 13, middle plate 10 has reached stop members 13 and 14 at the distal ends of guide pins 11 and 12. These stop members serve to hold middle plate 10 in this position.

Figure 14 shows the device in its open position. Movable plate 2 has been moved along the bars 18 and 19 to a position further from fixed mold 4, and spaced apart from middle plate 10. The plate is suspended from guide pins 11 and 12 by stop members 13 and 14. Also, retainer 22 has pulled end 17 of grommet 15 into the axial hollow. It then releases the grommet. Due to its resilience, grommet 15 can be removed from edge 23 of middle plate 10. It carries with it sprue 7 and gate 8 which are removed thereafter to form the finished grommet.

The modified form of the device is shown in Figures 15 to 17. It comprises mold clamping cylinder 1 mounted on base 21. Movable mold 3 is affixed to movable plate 2 and fixed mold 4 is attached to fixed plate 20 which, in turn, is affixed to support 41. In its closed position, as shown in Figure 15, movable mold 3 is adjacent fixed mold 4, and edge 23 of middle plate 10 and core 16 extend therein, thereby forming molding space 9 for formation of the grommet. Core 16 is mounted on piston 27 which is adapted for movement in the second direction, i.e. horizontally as shown in Figure 15. The moldable material is introduced by injection cylinder 5 through nozzle 6, sprue 7, and a gate (not shown) into molding space 9.

Movable plate 2, carrying movable molds 3 and middle plate 10, is moved along tie bars 18 and 19 to the intermediate position as shown in Figure 16. Middle plate 10 and guide 28 rest on stops 25 and 26, respectively, thereby preventing middle plate 10 from further downward movement. At this stage, core 16 remains in the axial hollow (30) of grommet 15 and retainer 22 engages the adjacent end of the grommet.

Movable plate 2, carrying movable mold 3, continues to move in the first direction into the open position as shown in Figure 17. Since downward movement of plate 10 is prevented by stops 11 and 12, movable mold 3 is now separated completely from grommet 15. Core moving cylinder 27 is activated and core 16 is drawn out of the axial hollow 30 of grommet 15 in a second direction; edge 23 of middle plate 10 holds body 24 and prevents movement of grommet 15. Preferably, the second direction is perpendicular to the first direction. Retainer 22, as core 16 is withdrawn, carries grommet end 17 into the axial hole to the position shown in Figure 17. At this point, the grommet is removed from plate 10 and sprue 7 and gate 8 are removed and discarded.

In a preferred form of the device, heater 29 is provided adjacent space 9 so that the moldable material can be heat-cured if appropriate. This element has been omitted from Figures 2 and 3 for clarity-.

It will be appreciated by those skilled in the art that modifications can be made to the external mold structure and to the core used in molding the grommet while still employing the method of the present Invention to invert the long tube funnel section into the short tube funnel section. For example, core 16 could terminate at the point where reinforcement 22 is formed. Thus, long tube funnel section 116 is still maintained in frictional contact with core 16 due to round reinforcement 22 and is pulled through short term funnel section 118 (see Figure 5). Likewise, core 72 could terminate just past L-shaped protrusion 80 so that L-shape protrusion 80 continues to maintain frictional contact with long tube funnel section 116 and long tube funnel section 116 is inverted into short tube funnel section 118.

While only a limited number of specific examples of the present invention have been expressly disclosed, it is, nonetheless, to be broadly construed, and not to be limited except by the character of the clams appended hereto.

## Claims

1. A method of forming a grommet (15), said grommet comprising a body (24), a long tube funnel section (33) on one side of said body, and a short tube funnel section (34) on an opposite side to said body, said method comprising
a) molding said grommet in a molding space (9) of a closed mold (70), said molding space being defined by a core (16) and an external mold structure which includes a middle plate (10) and mold sections (3,4);
b) opening said mold (70), leaving said core (16) and said middle mold plate (10) in contact with said grommet (15);
c) moving said core (16) through said grommet (15) to pull said long tube funnel section (33) into said short tube funnel section (34), thereby forming a double walled portion; and
d) releasing said grommet (15) from contact with said middle plate (10) and said core (16).

2. The method of claim 1 wherein said core (16) has a depression (22) at a portion corresponding to a distal end of said long tube funnel section (33) so as to form a retainer (38).

3. The method of claim 1 wherein said core (16) has a L-shaped protrusion (80) at a point on said core corresponding to a distal end of said long term funnel section (33).

4. A mold (70) for molding a grommet (15) comprising a core (16) and a multi part external mold structure, said core having an L-shaped protrusion (80) at one end of said core and said external mold structure having a depression (82) complementary to said L-shaped protrusion of said core.

5. The mold (70) of claim 4 further comprising four mold sections (76) and a middle plate (74).

6. The mold of claim 5 wherein said mold structure is movable to remove said mold sections (76) from said grommet (15) and leave said core (16) and said middle plate (74) in contact with said grommet.

7. A device for molding a grommet (15), said grommet having a body (24) with an axial hollow and an external peripheral channel (35) therein, said device comprising
a fixed mold (4), and a movable mold (3) adapted for movement between a closed position, wherein said fixed mold and said movable mold are adjacent each other with a middle plate (10) therebetween, an intermediate position, wherein said movable mold (3) and said middle plate (10) are spaced apart from said fixed mold (4), and an open position, wherein said movable mold (3) is spaced further apart from said fixed mold (4) and spaced apart from said middle plate (10),
a core (16) affixed to said movable mold (3), said core, an edge of said middle plate (10), said fixed mold (4), and said movable mold defining a molding space for said grommet (15) when in said closed position, a plane of said middle plate (10) being perpendicular to said movement,
an edge of said middle plate (10) projecting into said space whereby, when moldable material is injected into said space and solidifies, said channel is formed with said edge therein.

8. The device of claim 7 comprisinq a retainer (22) on said core (16) adjacent a mold end remote from said middle plate (10) whereby, when said movable mold (3) is moved from said intermediate position to said open position, said retainer (22) carries an adjacent neck ot said grommet (15) into said axial hollow, said edge in said channel preventing said body (24) of said grommet (15) from moving toward said open position.

9. The device of claim 7 wherein said movable mold is slidably mounted on at least one guide pin, said guide pin (18, 19) having a proximal end mounted on said fixed mold (4) and a distal end remote from said fixed mold, said guide pin extending parallel to said movement.

10. The device of claim 9 wherein there are two guide pins (18, 19) spaced apart in a direction perpendicular to said movement.

11. The device of claim 9 or 10 wherein at least one guide pin carries a stop member (13, 14) for said middle plate (10) adjacent said distal end whereby, when said movable mold (3) moves from said intermediate position to said open position, said middle plate (10) remains in said intermediate position.

12. The device of claim 7 wherein said retainer (22) is a peripheral groove in said core which is complementary to a ring extending radially inwardly fron said grommet.

13. A device for molding a grommet (15), said grommet having a body (24) with an axial hollow therein and an external peripheral channel (35) thereon, said device comprising
a fixed mold (4) and a movable mold (3), said movable mold having a closed position wherein said movable mold and said fixed mold are adjacent each other and thereby define a cavity, a middle plate (10) having an edge, a core (16), said edge and said core being within said cavity when said movable mold is in said closed position, said edge, said core, said movable mold, and said fixed mold defining a molding space for said grommet when said movable mold is in said closed position whereby, when moldable material is injected into said molding space and solidifies, said channel is formed with said edge therein, and said axial hollow is formed with said core therein;
said movable mold (3) having an intermediate position, wherein said movable mold (3) and said grommet (15) are spaced apart from said fixed mold (4) in a first direction, said movable mold having an open position, wherein said movable mold (3) is spaced apart from said grommet in said first direction and said grommet is between said movable mold (3) and said fixed mold (4), said movable mold adapted for movement from said closed position to said intermediate position to said open position in said first direction;
said core (16) being in said axial hollow when in said molding position, said core having a withdrawn position wherein said core is withdrawn from said grommet (15) in a second direction perpendicular to said first direction, said core adapted for movement from said molding position to said withdrawn position in said second direction,
said edge adapted to restrain said grommet (15) from movement in said second direction, whereby said core (16) is withdrawn from said axial hollow of said grommet when said core (16) moves from said molding position to said withdrawn position.

14. The device of claim 13 comprising at least one stop, preventing movement in said first direction of said middle plate (10) when said movable mold (3) moves from said intermediate position to said open position.

15. The device of caim 13 wherein there is a retainer (22) on a mold end of said core (16) opposite said second direction, said mold end engaging an adjacent end (17) of said grommet (15) whereby, when said core (16) moves from said molding position to said withdrawn position, said adjacent end (17) is drawn into said axial hollow.

16. The device of claim 13 wherein said core (16) is moved from said molding position to said withdrawn position by a hydraulic cylinder (27).

17. The device of any of claims 7 to 16 wherein said movable mold (3) is moved from said closed position to said intermediate position to said open position by a hydraulic cylinder (1).

18. The device of any of claim 7 to 17 comprising a heater (29) adjacent said molding space to cause said moldable material to solidify.

## Patentansprüche

1. Verfahren zum Formen einer Durchgangstülle (15), die einen Hauptteil (24), einen langen Schlauchtrichterabschnitt (33) auf einer Seite des Hauptteils und einen kurzen Schlauchtrichterabschnitt (34) auf der anderen Seite des Hauptteils aufweist, wobei das Verfahren umfaßt:
a) Formen der Durchgangstülle in einer Formkavität (9) einer geschlossenen Form (70), wobei die Formkavität begrenzt ist durch einen Kern (16) und ein äußeres Formwerkzeug, das eine Mittelplatte (10) und Formhälften (3, 4) umfaßt,
b) Öffnen der Form (70), wobei der Kern (16) und die Formmittelplatte (10) in Kontakt mit der Durchgangstülle (15) belassen werden;
c) Bewegen des Kerns (16) durch die Durchgangstülle (15), um den langen Schlauchtrichterabschnitt (33) in den kurzen Schlauchtrichterabschnitt (34) hineinzuziehen und hierdurch einen doppelwandigen Abschnitt zu bilden; und
d) Freigabe der Durchgangstülle (15) aus der Berührung mit der Mittelplatte (10) und dem Kern (16).

2. Verfahren nach Anspruch 1,
bei dem der Kern (16) eine Vertiefung (22) in einem Bereich aufweist, der dem freien Ende des langen Schlauchtrichterabschnitts (33) entspricht, um einen Eingriff (38) zu bilden.

3. Verfahren nach Anspruch 1,
bei dem der Kern (16) einen L-förmigen Vorsprung (80) an einer Stelle des Kerns aufweist, die dem freien Ende des langen Schlauchtrichterabschnitts (33) entspricht.

4. Form (70) zum Formen einer Durchgangstülle (15), mit einem Kern (16) und einem mehrteiligen äußeren Formwerkzeug, wobei der Kern einen L-förmigen Vorsprung (80) an einem Ende des Kerns aufweist und das äußere Formwerkzeug eine Vertiefung (82) komplementär zu dem L-förmigen Vorsprung des Kerns aufweist.

5. Form (70) nach Anspruch 4,
die ferner vier Formsektionen (76) und eine Mittelplatte (74) aufweist.

6. Form nach Anspruch 5,
bei der das Formwerkzeug bewegbar ist, um die Formsektionen (76) von der Durchgangstülle (15) wegzubewegen und den Kern (16) und die Mittelplatte (74) in Kontakt mit der Durchgangstülle zu belassen.

7. Vorrichtung zum Formen einer Durchgangstülle (15), die einen Hauptteil (24) mit einem axialen Hohlraum und einer äußeren Umfangsnut (35) aufweist, wobei die Vorrichtung umfaßt:
eine feststehende Formhälfte (4) und eine bewegliche Formhälfte (3), die bewegbar ist zwischen einer geschlossenen Stellung, in der die feste Formhälfte und die bewegliche Formhälfte aneinander anliegen unter Zwischenfügung einer Mittelplatte (10), einer Zwischenstellung, in der die bewegliche Formhälfte (3) und die Mittelplatte (10) von der festen Formhälfte (4) getrennt sind, und einer offenen Stellung, bei der die bewegliche Formhälfte (3) weiter von der festen Formhälfte (4) entfernt und von der Mittelplatte (10) getrennt ist,
einen Kern (16), der an der beweglichen Formhälfte (3) befestigt ist, wobei der Kern, der Rand der Mittelplatte (10), die feststehende Formhälfte (4) und die bewegliche Formhälfte in der geschlossenen Stellung eine Formkavität für die Durchgangstülle (15) begrenzen, wobei die Ebene der Mittelplatte (10) rechtwinklig zu der Bewegung ist,
wobei ein Rand der Mittelplatte (10) in die Formkavität hinein vorsteht, so daß beim Einspritzen und Verfestigen von formbarem Material in die Formkavität die Nut geformt wird, in der sich der Rand befindet.

8. Vorrichtung nach Anspruch 7,
mit einem Eingriff (22) an dem Kern (16) nahe einem Formende entfernt von der Mittelplatte (10), wobei beim Bewegen der beweglichen Formhälfte (3) aus der Zwischenstellung in die offene Stellung der Eingriff (22) den anliegenden Hals der Durchgangstülle (15) in den axialen Hohlraum hinein mitnimmt, wobei die Kante in der Nut verhindert, daß sich der Hauptteil (24) der Durchgangstülle (15) in Richtung zur offenen Stellung bewegt.

9. Vorrichtung nach Anspruch 7,
bei der die bewegliche Formhälfte verschiebbar auf mindestens einem Führungsstift gelagert ist, wobei der Führungsstift (18, 19) ein an der festen Formhälfte (4) befestigtes proximales Ende und ein von der festen Formhälfte entferntes distales Ende aufweist und sich parallel zu der Bewegung erstreckt.

10. Vorrichtung nach Anspruch 9,
bei der zwei Führungsstifte (18, 19) vorgesehen sind, die in einer zur Bewegung senkrechten Richtung voneinander beabstandet sind.

11. Vorrichtung nach Anspruch 9 oder 10,
bei der mindestens ein Führungsstift nahe seinem distalen Ende einen Anschlag (13, 14) für die Mittelplatte (10) trägt, wodurch die Mittelplatte (10) in der Zwischenstellung verbleibt, wenn sich die bewegliche Formhälfte (3) von der Zwischenstellung zur Öffnungsstellung bewegt.

12. Vorrichtung nach Anspruch 7,
bei der der Eingriff (22) eine Umfangsnut in dem Kern ist, die komplementär zu einem Ring ist, der sich von der Durchgangstülle radial nach innen erstreckt.

13. Vorrichtung zum Formen einer Durchgangstülle (15),
die einen Hauptteil (24) mit einem axialen Hohlraum darin und einer äußeren Umfangsnut (35) daran aufweist, wobei die Vorrichtung umfaßt:
eine feststehende Formhälfte (4) und eine bewegliche Formhälfte (3), wobei die bewegliche Formhälfte eine geschlossene Stellung hat, in der die bewegliche Formhälfte und die feste Formhälfte aneinander anliegen und dadurch eine Formkavität begrenzen, eine Mittelplatte (16) mit einer Kante, einen Kern (16), wobei sich die Kante und der Kern in der Kavität befinden, wenn die bewegliche Formhälfte in der geschlossenen Stellung ist, wobei die Kante, der Kern, die bewegliche Formhälfte und die feste Formhälfte eine Formkavität für die Durchgangstülle begrenzen, wenn die bewegliche Formhälfte in der geschlossenen Stellung ist, wodurch beim Einspritzen und Verfestigen von formbarem Material in die Formkavität die Umfangsnut geformt wird, in der sich die Kante befindet, und der axiale Hohlraum geformt wird, in dem sich der Kern befindet;
wobei die bewegliche Formhälfte (3) eine Zwischenstellung hat, in der die bewegliche Formhälfte (3) und die Durchgangstülle (15) in einer ersten Richtung von der festen Formhälfte (4) beabstandet sind, und die bewegliche Formhälfte eine offene Stellung hat, in der die bewegliche Formhälfte (3) von der Durchgangstülle in der ersten Richtung beabstandet ist und die Durchgangstülle sich zwischen der beweglichen Formhälfte (3) und der festen Formhälfte (4) befindet, wobei die bewegliche Formhälfte zwischen der geschlossenen Stellung über die Zwischenstellung in die offene Stellung in der ersten Richtung bewegbar ist,
wobei sich der Kern (16) der Einspritzstellung in dem axialen Hohlraum befindet und der Kern eine zurückgezogene Stellung hat, in der er aus der Durchgangstülle (15) in einer zweiten Richtung herausgezogen ist, die rechtwinkelig zu der ersten Richtung ist, wobei der Kern aus der Einspritzstellung in die zurückgezogene Stellung in der zweiten Richtung bewegbar ist,
wobei die Kante die Durchgangstülle (15) gegen eine Bewegung in der zweiten Richtung festhält, so daß der Kern (16) aus dem axialen Hohlraum der Durchgangstülle herausgezogen wird, wenn der Kern (16) sich von der Einspritzstellung in die zurückgezogene Stellung bewegt.

14. Vorrichtung nach Anspruch 13,
mit mindestens einem Anschlag, der eine Bewegung der Mittelplatte (10) in der ersten Richtung verhindert, wenn die bewegbare Formhälfte (3) sich von der Zwischenstellung in die offene Stellung bewegt.

15. Vorrichtung nach Anspruch 13,
mit einem Eingriff (22) an dem Formende des Kerns (16) gegenüber der zweiten Richtung, wobei das Formende ein benachbartes Ende (17) der Durchgangstülle (15) erfaßt, so daß bei der Bewegung des Kerns (16) aus der Einspritzstellung in die zurückgezogene Stellung das anliegende Ende (17) in den axialen Hohlraum hineingezogen wird.

16. Vorrichtung nach Anspruch 13,
bei der der Kern (16) aus der Einspritzstellung in die zurückgezogene Stellung durch einen Hydraulikzylinder (27) bewegt wird.

17. Vorrichtung nach einem der Ansprüche 7 bis 16,
bei der die bewegliche Formhälfte (3) von der geschlossenen Stellung über die Zwischenstellung in die offene Stellung durch einen Hydraulikzylinder (1) bewegt wird.

18. Vorrichtung nach einem der Ansprüche 7 bis 17,
mit einer Heizvorrichtung (29) angrenzend an den Formkavität zum Bewirken der Verfestigung des formbaren Materials.

## Revendications

1. Procédé de formation d'un passe-fil (15), ledit passe-fil comprenant un corps (24), une longue section d'entonnoir tubulaire (33) sur un côté dudit corps et une courte section d'entonnoir tubulaire (34) sur un côté opposé dudit corps, ledit procédé comprenant
a) le moulage dudit passe-fil dans un espace de moulage (9) d'un moule fermé (70), ledit espace de moulage étant défini par un noyau (16) et une structure de moule externe qui comprend une plaque médiane (10) et des sections de moule (3, 4) ;
b) l'ouverture dudit moule (70) laissant ledit noyau (16) et ladite plaque de moule médiane (10) en contact avec ledit passe-fil (15) ;
c) le déplacement dudit noyau (16) à travers ledit passe-fil (15) pour tirer ladite longue section d'entonnoir tubulaire (33) dans ladite courte section d'entonnoir tubulaire (34), ayant pour effet de former une partie à double paroi ; et
d) la libération du contact dudit passe-fil (15) avec ladite plaque médiane (10) et ledit noyau (16).

2. Procédé selon la revendication 1, dans lequel ledit noyau (16) présente un creux (22) au niveau d'une partie correspondant à une extrémité distale de ladite longue section en entonnoir tubulaire (33) de façon à former un arrêtoir (38).

3. Procédé selon la revendication 1, dans lequel ledit noyau présente une saillie en forme de L (80) au niveau d'un point sur ledit noyau correspondant à une extrémité distale de ladite longue section en entonnoir tubulaire (33).

4. Moule (70) destiné à mouler un passe-fil (15) comprenant un noyau (16) et une structure de moule externe en plusieurs pièces, ledit noyau présentant une saillie en forme de L (80) au niveau d'une extrémité dudit noyau et ladite structure de moule externe présentant un creux (82) complémentaire de ladite saillie en forme de L dudit noyau.

5. Moule (70) selon la revendication 4, comprenant de plus quatre sections de moule (76) et une plaque médiane (74).

6. Moule selon la revendication 5, dans lequel ladite structure de moule est mobile afin de retirer lesdites sections de moule (76) dudit passe-fil (15) et de laisser ledit noyau (16) et ladite plaque médiane (74) en contact avec ledit passe-fil.

7. Dispositif destiné à mouler un passe-fil (15), ledit passe-fil comportant un corps (24) avec, à l'intérieur, un creux axial et un canal périphérique externe (35), ledit dispositif comprenant
un moule fixe (4) et un moule mobile (3), adaptés pour un mouvement entre une position fermée, dans laquelle ledit moule fixe et ledit moule mobile sont adjacents l'un à l'autre avec une plaque médiane (10) entre eux, une position intermédiaire dans laquelle ledit moule mobile (3) et ladite plaque médiane (10) sont espacés dudit moule fixe (4) et une position ouverte, dans laquelle ledit moule mobile (3) est davantage espacé dudit moule fixe (4) et espacé de ladite plaque médiane (10),
un noyau (16) fixé audit moule mobile (3), ledit noyau, un bord de ladite plaque médiane (10), ledit moule fixe (4) et ledit moule mobile définissant un espace de moulage pour ledit passe-fil (15) lorsqu'ils sont dans ladite position fermée, un plan de ladite plaque médiane (10) étant perpendiculaire audit mouvement,
un bord de ladite plaque médiane (10) dépassant dans ledit espace, d'où il résulte que lorsque le matériau moulable est injecté dans ledit espace et se solidifie, ledit canal est formé avec ledit bord à l'intérieur.

8. Dispositif selon la revendication 7, comprenant un arrêtoir (22) sur ledit noyau (16) adjacent à une extrémité du moule distante de ladite plaque médiane (10) d'où il résulte que lorsque ledit moule mobile (3) est déplacé de ladite position intermédiaire à ladite position ouverte, ledit arrêtoir (22) porte un collet adjacent audit passe-fil (15) dans ledit creux axial, ledit bord dans ledit canal empêchant ledit corps (24) dudit passe-fil (15) de se déplacer vers ladite position ouverte.

9. Dispositif selon la revendication 7, dans lequel ledit moule mobile est monté de façon coulissante sur au moins une broche de guidage, ladite broche de guidage (18, 19) présentant une extrémité proximale montée sur ledit moule fixe (4) et une extrémité distale éloignée dudit moule fixe, ladite broche de guidage se prolongeant parallèlement audit mouvement.

10. Dispositif selon la revendication 9, dans lequel il y a deux broches de guidage (18, 19) espacées selon une direction perpendiculaire audit mouvement.

11. Dispositif selon la revendication 9 ou 10, dans lequel une broche de guidage au moins porte un élément d'arrêt (13, 14) pour ladite plaque médiane (10) adjacent à ladite extrémité distale, d'où il résulte que lorsque ledit moule mobile (3) se déplace de ladite position intermédiaire à ladite position ouverte, ladite plaque médiane (10) reste dans ladite position intermédiaire.

12. Dispositif selon la revendication 7, dans lequel ledit arrêtoir (22) est une gorge périphérique dans ledit noyau qui complète un anneau se prolongeant radialement vers l'intérieur à partir dudit passe-fil.

13. Dispositif destiné à mouler un passe-fil (15), ledit passe-fil comportant un corps (24) avec un creux axial à l'intérieur et un canal périphérique (35) dessus, ledit dispositif comprenant
un moule fixe (4) et un moule mobile (3), ledit moule mobile ayant une position fermée dans laquelle ledit moule mobile et ledit moule fixe sont adjacents l'un à l'autre, ce qui a pour effet de définir une cavité, une plaque médiane (10) présentant un bord, un noyau (16), ledit bord et ledit noyau se trouvant à l'intérieur de ladite cavité lorsque ledit moule mobile est dans ladite position fermée, ledit bord, ledit noyau, ledit moule mobile et ledit moule fixe définissant un espace de moulage pour ledit passe-fil lorsque ledit moule mobile est dans ladite position fermée, d'où il résulte que lorsque le matériau moulable est injecté dans ledit espace de moulage et se solidifie, ledit canal est formé avec ledit bord à l'intérieur et ledit creux axial est formé avec ledit noyau à l'intérieur ;
ledit moule mobile (3) ayant une position intermédiaire, dans laquelle ledit moule mobile (3) et ledit passe-fil (15) sont espacés dudit moule fixe (4) dans une première direction, ledit moule mobile ayant une position ouverte dans laquelle ledit moule mobile (3) est espacé dudit passe-fil dans ladite première direction et ledit passe-fil est entre ledit moule mobile (3) et ledit moule fixe (4), ledit moule mobile étant adapté pour un mouvement à partir de ladite position fermée à ladite position intermédiaire, puis à ladite position ouverte dans ladite première direction ;
ledit noyau (16) étant dans ledit creux axial lorsqu'il est dans ladite position de moulage, ledit noyau ayant une position de retrait dans laquelle ledit noyau est retiré dudit passe-fil (15) dans une deuxième direction perpendiculaire à ladite première direction, ledit noyau-étant adapté pour un mouvement de ladite position de moulage à ladite position de retrait dans ladite deuxième direction,
ledit bord étant adapté pour limiter le mouvement dudit passe-fil (15) dans ladite deuxième direction, d'où il résulte que ledit noyau (16) est retiré dudit creux axial dudit passe-fil lorsque ledit noyau (16) se déplace de ladite position de moulage à ladite position de retrait.

14. Dispositif selon la revendication 13, comprenant au moins un arrêt empêchant le mouvement dans ladite première direction de ladite plaque médiane (10) lorsque ledit moule mobile (3) se déplace de ladite position intermédiaire à ladite position ouverte.

15. Dispositif selon la revendication 13, dans lequel il y a un arrêtoir (22) sur une extrémité du moule dudit noyau (16) opposée à ladite deuxième direction, ladite extrémité de moule entrant en prise avec une extrémité adjacente (17) dudit passe-fil (15), d'où il résulte que lorsque ledit noyau (16) se déplace de ladite position de moulage à ladite position de retrait, ladite extrémité adjacente (17) est tirée dans ledit creux axial.

16. Dispositif selon la revendication 13, dans lequel ledit noyau (16) est déplacé de ladite position de moulage à ladite position de retrait par un vérin hydraulique (27).

17. Dispositif selon l'une quelconque des revendications 7 à 16, dans lequel ledit moule mobile (3) est déplacé de ladite position fermée à ladite position intermédiaire, puis à ladite position ouverte par un vérin hydraulique (1).

18. Dispositif selon l'une quelconque des revendications 7 à 17, comprenant un élément chauffant (29) adjacent audit espace de moulage pour amener ledit matériau moulable à se solidifier.
